# EUROPEAN PATENT APPLICATION

(11) **EP 1 211 428 A1**
(43) Date of publication of application: **05.06.2002**
(21) Application number: 01127832.2
(22) Date of filing: 22.11.2001
(51) Int. Cl.: F16B 12/30, F16B 12/32, F16B 12/40, F16B 7/04

(54) **Dismountable furniture tubing frame and method of assembly**

(30) Priority: 27.11.2000 IT UD000213
(71) Applicant: M.F. Metal Forniture Srl, 33044 Manzano (UD) (IT)
(72) Inventor: Bernardi, Giacomo, 33040 Corno Di Rosazzo (UD) (IT); Beltrame, Francesco, 33044 Manzano (UD) (IT)
(74) Representative: Petraz, Gilberto Luigi

(57) **Abstract**

Device (10) and method to attach together at least a first (13a) and a second (13b) tubular element of a frame (11) for pieces of furniture (12), wherein said device (10) comprises at least a coupling element (14) able to be attached to the first tubular element (13a) by means of first attachment means (15) and to be inserted into the second tubular element (13b), and second attachment means (16) able to be associated with the second tubular element (13b) and to be constrained in correspondence with the first attachment means (15) to clamp together the two tubular elements (13a, 13b).

## Description

### FIELD OF THE INVENTION

The invention concerns a device and a method to assemble knockdown furniture frames.

The invention is employed to assemble furniture frames comprising a plurality of tubular components which can be associated together, preferentially made of metal or similar material.

The term "furniture" should be taken to mean any furnishing component, such as a table, shelf, cupboard, chair, trolley or suchlike.

### BACKGROUND OF THE INVENTION

There are various types of knockdown frames for furniture in the state of the art, comprising a plurality of tubular components, generally made of metal, able to be assembled together. Knockdown frames have the advantage that they allow a considerable reduction in the space occupied by the packaged goods, with operational and economic advantages in storing, movement and transport.

On the contrary, they have problems such as high production costs, difficulties in assembly/dis-assembly, large number of attachment and hardware elements which have to be used, and above all, they lack hold and resistance to mechanical stresses when they are in the assembled condition. This last problem is particularly accentuated in metal tubular frames, wherein the coupling of the various attachment components cannot exploit the partial yielding of the material.

It is known that some embodiments use auxiliary coupling elements such as platelets, angular profiles or similar, which are usually welded to a relative tubular element and protrude from the bulk thereof. Such coupling elements, apart from increasing costs and production times, make the surface finishing operations on the components themselves more problematic, particularly in the case of painted elements; they can also cause scratches or marks, problems in handling and transport, and problems in wrapping and packing.

Another disadvantage of using such coupling elements is the difficulty of centering and aligning the clamping elements with the relative anchorage seats; the minimal rotations which are needed in order to achieve such centering cause a loss of rigidity of the assembled frame.

The present Applicant has devised and embodied this invention to overcome said shortcomings and to obtain further advantages.

### SUMMARY OF THE INVENTION

The invention is set forth and characterized in the respective main claims, while the dependent claims describe other characteristics of the invention.

The purpose of the invention is to achieve a simple, economical and effective device to be employed in assembling knockdown furniture frames comprising a plurality of tubular elements, mostly metallic, ensuring a high level of hold and rigidity of said assembled frames over time.

Another purpose is to make the operations to assemble the knockdown frames easier and to prevent increases in the space occupied by the relative components and risks of damage during handling and transport.

The device according to the invention is used to attach together a first and a second tubular element; it comprises at least a coupling element able to be attached to said first tubular element by means of first attachment means and to be inserted into said second tubular element, and second attachment means able to be associated with the second tubular element and to be constrained in correspondence with said first attachment means to clamp together the two tubular elements.

According to one characteristic of the invention, the second attachment means have their inner end conformed substantially in a point able to cooperate with a mating wedge-shaped seating made on the first attachment means.

By conformed in a point, we mean substantially any conical or even slightly tapered shape, able to exert a retaining pressure on the bottom of said wedge-shaped seating in order to hold said first attachment means stably in position and consequently clamp together the two tubular elements.

According to a variant, the first attachment means are associated axially with a spacer element able to cooperate with said coupling element and to at least partly define said wedge-shaped seating. Said spacer element can be a distinct element or can be made in a single piece with said first attachment means.

To assemble two tubular elements together, the invention provides to associate the coupling element to the first tubular element.

In a preferential embodiment, said coupling element has positioning and centering means by means of which it can be pre-assembled on said first tubular element.

Subsequently, said coupling element is stably clamped to the first tubular element by means of the first attachment means and the second tubular element is engaged thereon.

Finally, the two tubular elements are clamped together by means of the second attachment means, which are inserted into the second tubular element until they take the relative inner end to be clamped in correspondence with the wedge-shaped seating provided in the first attachment means, in this way eliminating every problem of alignment and centering of said second attachment means and the relative seating.

Moreover, with this invention we obtain the substantial advantage of making it possible to separate the coupling element from the relative tubular element, eliminating the problems described above.

### BRIEF DESCRIPTION OF THE DRAWINGS

These and other characteristics of the invention will become clear from the following description of a preferential form of embodiment, given as a non-restrictive example with reference to the attached drawings wherein:
Fig. 1 shows a furniture frame which uses the device according to the invention;
Fig. 2 shows, with an exploded side view, a detail of the frame in Fig. 1;
Fig. 3 shows a variant of the invention;
Fig. 4 shows the section from A to A of Fig. 3;
Fig. 5 shows, with an exploded view in section, a detail of the frame in Fig. 1;
Fig. 6 shows a step in the assembly of the two tubular elements in Fig. 5;
Fig. 7 shows the two tubular elements of Fig. 6 in the final assembled condition;
Fig. 8 shows a variant of Fig. 4 which can be applied in the case of tubular elements with a circular section.

### DETAILED DESCRIPTION OF A PREFERENTIAL EMBODIMENT

In the attached Figures, a device 10 according to the invention is used to assemble frames 11 of pieces of furniture 12 comprising a plurality of tubular elements 13 of which at least two, a first 13a and a second 13b, are to be stably associated with each other.

The device 10 comprises a coupling element 14, a first screw-type attachment element 15, a second screw-type attachment element 16, a spacer element 17 and, in this case, two bushings, threaded inside, a first bushing 18 and a second bushing 19.

The bushings 18 and 19 are clamped substantially retracted inside the respective elements 13a and 13b; in a preferential embodiment, said bushings 18 and 19 are riveted to the relative tubular elements 13 and one of their edges 20 protrudes slightly with respect to said elements 13.

The coupling element 14 comprises a U-shaped profile able to be attached to the first tubular element 13a in correspondence with the first bushing 18; the second tubular element 13b is able to be engaged thereon.

Said coupling element 14, on its front side 14a, has a through hole 21 with a diameter mating with that of the first bushing 18 and able to align therewith; around said through hole 21 there is an impression 22 inside which the edge 20 is able to be inserted.

On the front side 14a the coupling element 14 also has a pin 23 able to be inserted into a mating hole 24 made on the first tubular element 13a to facilitate the pre-assembly of the element 14 and to center the through hole 21 with respect to the first bushing 18.

The spacer element 17 comprises a body able to abut against the inner face of the front side 14a of the element 14. Said spacer 17 has a through hole 17a inside which the first attachment element 15 is able to be inserted and has a bevelled edge 17b at the end opposite the end which rests on the side 14a.

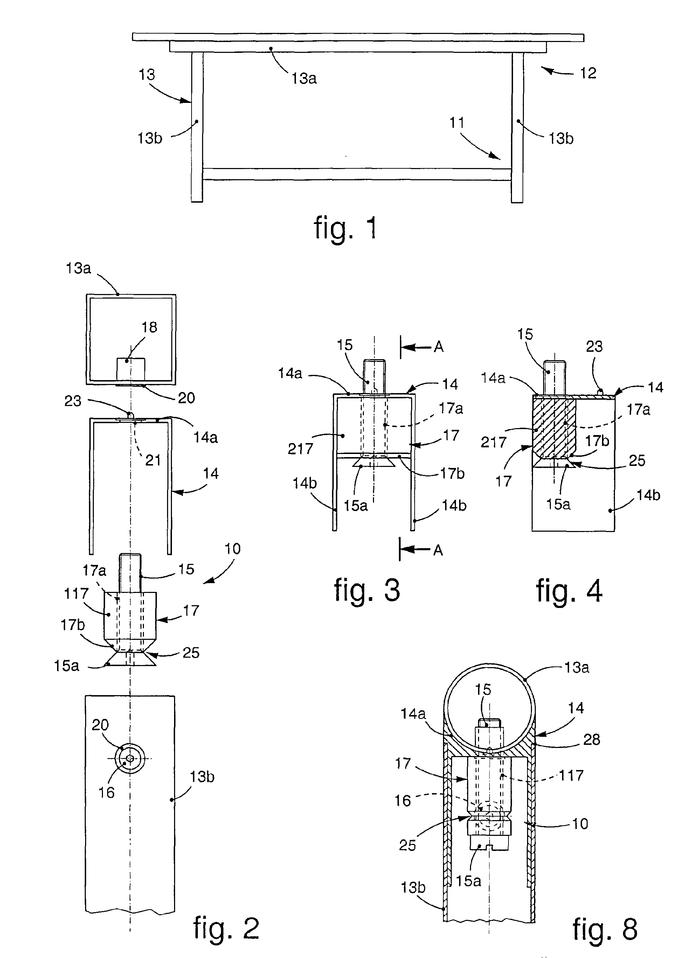

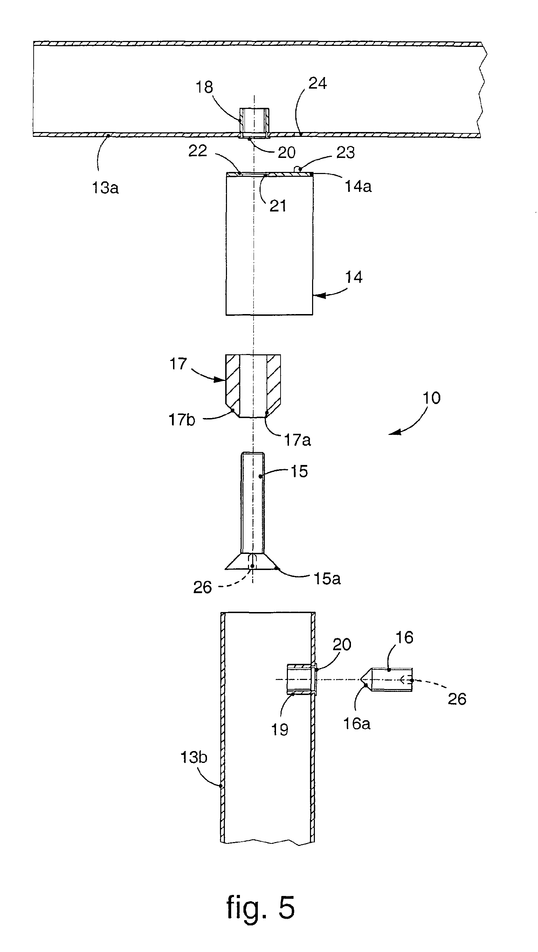

In the embodiment shown in Figs 2 and 5-7, the spacer element 17 comprises a hollow cylinder 117 and the bevelled edge 17b develops over its entire circumference. In the variant shown in Figs. 3 and 4, the spacer 17 comprises a block 217 with a rectangular section and able to be blocked in its rotation between the parallel sides 14b of the element 14; in this embodiment the bevelled edge 17b is present on the two lateral faces of the block 217 not associated with the parallel sides 14b.

The first attachment element 15 is able to be inserted into the through hole 17a and to screw onto the first bushing 18. Said first element 15 has a head 15a flared at the lower part able to define, together with the bevelled edge 17b of the spacer 17, a wedge-shaped seating 25 with which the second bushing 19 is able to align when the second tubular element 13b is engaged on the coupling element 14.

The second attachment element 16 is able to screw onto the second bushing 19 and comprises a dowel, or worm screw, the inner end 16a of which is pointed and able to be inserted into the wedge-shaped seating 25.

According to the invention, the bushings 18 and 19 are attached to the respective tubular elements 13a and 13b in correspondence with holes already prepared.

Assembly, which can be performed even by the final user, initially provides to pre-assemble the coupling element 14 on the first tubular element 13a, centering the through hole 21 with respect to the first bushing 18. This operation is facilitated by the presence of the pin 23 and the edge 20 which, inserted respectively into the hole 24 and the impression 22, automatically perform said alignment and centering.

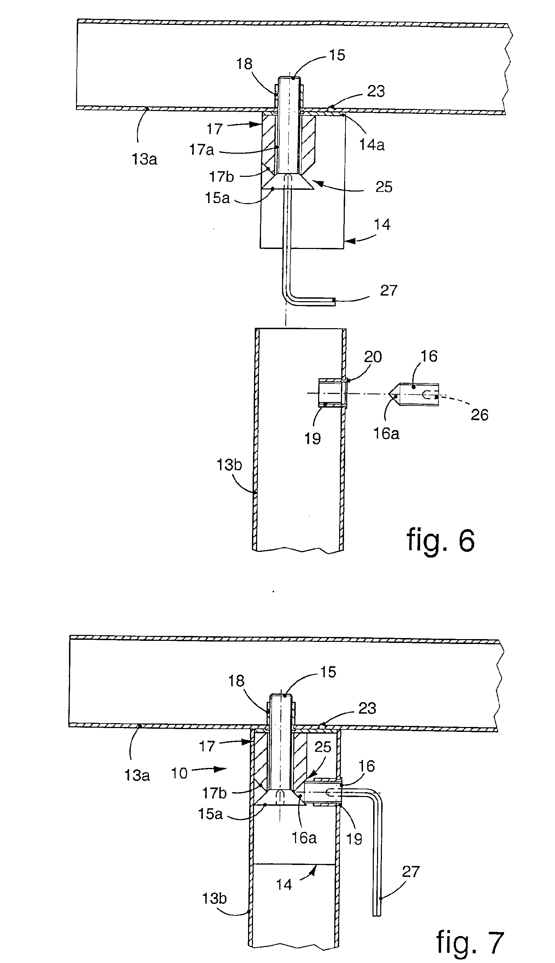

Subsequently, the first attachment element 15 is inserted into the hole 17a and screwed onto the first bushing 18 until its head 15a abuts in correspondence with the bevelled edge 17b of the spacer 17, so as to define the wedge-shaped seating 25 (Fig. 6). In this condition the coupling element 14 is solidly attached to the first tubular element 13a.

Then, the second tubular element 13b is engaged on the coupling element 14, taking the second bushing 19 into alignment with the wedge-shaped seating 25.

Finally, the second attachment element 16 is screwed onto the second bushing 19 until its end 16a is taken to be inserted inside the wedge-shaped seating 25, continuing to thrust against the head 15a of the first attachment element 15 and against the bevelled edge 17b of the spacer 17 (Fig. 7); in this condition the second attachment element 16 stably clamps the second tubular element 13b with respect to the first tubular element 13a which are thus reciprocally connected.

It is important to note that, irrespective of the rotated position of the first attachment element 15, both when the spacer 17 comprises a hollow cylinder 117 and when it comprises a block 217, the inner end of the second attachment element 16 always finds a segment of wedge-shaped seating 25, without any centering operation being necessary.

Advantageously, in the assembled condition the first attachment element 15 and the relative spacer 17 are located resting on a wall of the tubular element 13b (see Fig. 4, for example), so that when the second attachment element 16 is inserted and clamped, it can in no way deform said elements 15 and 17 due to the contrast with the thrust generated by said wall of the element 13b.

In the preferential embodiment shown, the elements 15 and 16 are provided with hexagonal dead holes 26 inside which a hexagonal key 27 is able to be inserted for the screwing operations.

The variant shown in Fig. 8 shows an embodiment applied in the case of tubular elements 13a and 13b with a circular, oval or similar section, wherein the coupling element 14 has the front part 14a shaped so as to couple with the shape of the tubular element 13a and a peripheral step 28 which defines the abutment position for the tubular element 13b.

It is obvious however that modifications and/or additions of parts can be made to the device 10 and the relative method as described heretofore without departing from the spirit and scope of the invention.

For example, the spacer 17 can have a different shape from that shown, provided that the shape is suitable to prevent the spacer 17 from rotating when the first attachment element 15 is screwed on, or in any case to guarantee the presence of a bevelled edge 17b.

Likewise, the stem of the first screw element 15 can have a thicker portion, to function as the spacer 17; an inclined edge is made thereon to define the wedge-shaped seating 25. Moreover, as shown in the variant in Fig. 8, the wedge-shaped seating 25 can be defined by a circumferential groove entirely made on the body of the spacer 17, and in this case the head 15a of the attachment element 15 can also be cylindrical. Furthermore, the bushings 18 and 19 may not be present and the screw elements 15 and 16 may screw onto threads made directly on the tubular elements 13.

It is also obvious that, although the invention has been described with reference to specific examples, a skilled person in the art shall certainly be able to achieve many other equivalent forms of assembly device, all of which shall come within the field and scope of this invention.

## Claims

1. Device to attach together at least a first (13a) and a second (13b) tubular element of a frame (11) for pieces of furniture (12), **characterized in that** it comprises at least a coupling element (14) able to be attached to said first tubular element (13a) by means of first attachment means (15) and to be inserted into said second tubular element (13b), and second attachment means (16) able to be associated with said second tubular element (13b) and to be constrained in correspondence with said first attachment means (15) to clamp together the two tubular elements (13a, 13b).

2. Device as in claim 1, **characterized in that** said coupling element (14) can be removed with respect to the relative first tubular element (13a).

3. Device as in claims 1 or 2, **characterized in that** said second attachment means (16) means have their inner end (16a) shaped substantially in a point and able to cooperate with a mating wedge-shaped seating (25) made in correspondence with the first attachment means (15).

4. Device as in claim 3, **characterized in that** said first attachment means (15) are axially associated with a spacer element (17) able to cooperate with said coupling element (14) and to at least partly define said wedge-shaped seating (25).

5. Device as in claim 4, **characterized in that** said spacer element (17) is a distinct element with respect to said first attachment means (15).

6. Device as in claim 4, **characterized in that** said spacer element (17) is made in a single piece with said first attachment means (15).

7. Device as in claim 3, wherein said first attachment means (15) include a head (15a), **characterized in that** said wedge-shaped seating (25) is at least partly defined by said head (15a).

8. Device as in claims 4 and 7, **characterized in that**, on at least part of its perimeter, said spacer element (17) has a bevelled edge (17b) defining, together with said head (15a), said wedge-shaped seating (25).

9. Device as in claim 4, **characterized in that** said wedge-shaped seating (25) is defined by a perimeter groove present along the body of said spacer element (17).

10. Device as in claim 4, **characterized in that** said spacer element (17) comprises a hollow cylindrical body (117).

11. Device as in claims 4 and 8, **characterized in that** said spacer element (17) comprises a block (217) able to be blocked through interference on said coupling element (14) and having said bevelled edge (17b) at least on the side facing towards said second attachment means (16).

12. Device as in claim 2, **characterized in that**, on one front side (14a) cooperating with said first tubular element (13a), said coupling element (14) has at least a pin (23) able to be inserted into a mating hole (24) of said first tubular element (13a).

13. Device as in claim 2, **characterized in that**, on one front side (14a) cooperating with said first tubular element (13a), said coupling element (14) has at least an impression (22) inside which a ridge (20) present on said first tubular element (13a) is able to be inserted.

14. Device as in any claim hereinbefore, **characterized in that** said coupling element (14) comprises a U-shaped profile.

15. Device as in any claim hereinbefore, **characterized in that** it comprises threaded bushing means (18, 19) able to be respectively associated with said first (13a) and second (13b) tubular element to screw thereon respectively said first (15) and second (16) attachment means.

16. Method to attach together at least a first (13a) and a second (13b) tubular element of a frame (11) for pieces of furniture, **characterized in that** it provides at least the following steps:
- a coupling element (14) is assembled onto a first tubular element (13a) by means of first attachment means (15);
- said second tubular element (13b) is engaged on said coupling element (14);
- said tubular elements (13a, 13b) are reciprocally clamped by inserting, on said second tubular element (13b), second attachment means (16) able to be constrained on said first attachment means (15) through the interference of an inner end (16a) of said second attachment means in a substantially wedge-shaped seating (25) made along said first attachment means (15).

17. Method as in claim 16, **characterized in that** it provides to pre-assemble said coupling element (14) on said first tubular element (13a) using positioning and centering means (22, 23) present on one front side (14a) of said element (14) and able to cooperate with mating retention means (20, 24) present on said first tubular element (13a).
